# EUROPEAN PATENT SPECIFICATION

(11) **EP 1 668 867 B1**
(45) Date of publication and mention of the grant of the patent: **06.01.2010**
(21) Application number: 04787181.9
(22) Date of filing: 21.09.2004
(51) Int. Cl.: H04L 29/06

(54) **PROVIDING A NECESSARY LEVEL OF SECURITY FOR COMPUTERS CAPABLE OF CONNECTING TO DIFFERENT COMPUTING ENVIRONMENTS**
BEREITSTELLUNG EINES NOTWENDIGEN SICHERHEITSGRADES FÜR COMPUTER MIT DER FÄHIGKEIT ZUR VERBINDUNG MIT VERSCHIEDENEN DATENVERARBEITUNGSUMGEBUNGEN
GARANTIE D'UN NIVEAU DE SECURITE NECESSAIRE POUR DES ORDINATEURS POUVANT ETRE CONNECTES A DIFFERENTS ENVIRONNEMENTS INFORMATIQUES

(30) Priority: 02.10.2003 US 677660
(43) Date of publication of application: 14.06.2006
(73) Proprietor: Lenovo (Singapore) Pte. Ltd., Singapore 556741 (SG)
(72) Inventor: KEOHANE, Susann, Marie, Austin, Texas 78704 (US); MCBREARTY, Gerald, Francis, Austin, Texas 78750 (US); MULLEN, Shawn, Patrick, Buda, Texas 78610 (US); MURILLO, Jessica, Round Rock, Texas 78681 (US); SHIEH, Johnny, Meng-Han, Austin, Texas 78731 (US)
(74) Representative: Weston, Robert Dale
(86) International application number: PCT/EP2004/052255
(87) International publication number: WO 2005/034465

(56) References cited:
- EP-A- 1 244 322
- EP-A- 1 265 182
- WO-A1-00/74345
- WO-A1-02/01902
- WO-A1-03/061188

## Description

### Technical Field

The field of the invention is data processing, or, more specifically, methods, systems, and products for providing a necessary level of security for computers capable of connecting to different computing environments.

### Background Art

One aspect of mobile computing is the fast growing use of wireless routers or wireless access points sometimes known as 'hot spots' which allow portable computer users to do their work while on the move. Hot spots are found now in coffee shops, hotels, lounges, book stores, restaurants, airports, and so on. Wired Internet connections are in many hotel rooms. Such mobile computing, however, can lead to security risks because portable connections either through wireless connections or to a random live wall connection can result in a user's connecting to the Internet through insecure connections or through unknown levels of security. Users can inadvertently send confidential data in the form of email, instant messaging, World Wide Web (HTTP) communications, or other network communications, that can be captured and analyzed by would be snoopers. There is an ongoing need, therefore, for improvement in data communication security methods and systems for mobile computing.

### Prior Art

Document EP 1 265 182 - A2-(Security and Standards Limited) discloses: A method for providing a necessary level of security for a computer capable of connecting to different computing environments, comprising:
i) monitoring a type of connection between the computer and a network in a current computing environment; and
ii) determining a security level of data before sending the data across the network.

Document WO 02/01902 - A - (Nokia Corporation) discloses a communication network system which comprises at least two different types of radio access networks attached to a core network. In the network system, a subscriber communicates via a first radio access network with the core network which forces handover of the subscriber to another type of radio access network on the basis of operator specific criteria.

WO00/74345 A1 discloses a method for secure communication between entities wherein a determination is made with respect to security measures needed for the communication between the entities. If such measures do not exist, the measures are established and the communication is initiated. Security measures are established between entities based on predetermined security requirements and on a determined needed security level based on the information being transmitted. EP-A-1244322 also discloses a system in which the level of security of a network connection is assessed and then the user is warned and given an option of disconnection.

### Statement of Invention

According to the present invention, a method for providing a necessary level of security for a computer as disclosed in Document EP 1 265 182 is characterised by:
iii) storing the data in a buffer instead of sending the data across the network if the connection to the network lacks a security control required for the determined security level of the data;
   and,
iv) sending the data from the buffer when the computer is connected to a changed computing environment having a new type of connection that has the security control required for the data.

Neither document EP 1 265 182 nor WO 02/01902 disclose storing data in a buffer if a required security level is not present and sending stored data when a required security level is present.

Embodiments of the present invention are set forth in appended claims 2 to 12.

Methods, systems, and products are disclosed providing a certain level of security for a computer capable of connecting to different computing environments. Typical embodiments include monitoring a type of connection between the computer and a network in a current computing environment. Monitoring a type of connection may be carried out by periodically determining the type of connection between the computer and the network, or monitoring a type of connection may be carried out by in an event- driven fashion. Event driven determination may be carried out when processes implementing embodiments of the invention are invoked, as upon power-up of a computer on which they are installed. Alternatively, when determining a security level results in a determination that data to be transmitted requires at least some level of security, event-driven determining of the type of connection is carried out in response to such determination.

Typical embodiments include determining a security level of data before sending the data across the network. Determining a security level of data before sending the data across the current network may be implemented by reading the security level of data from a markup element embedded in the data or by reading the security level of data from meta-data in a header in a network message.

Typical embodiments include storing data in a buffer instead of sending the data across the network if the connection to the network lacks a security control required for the determined security level of the data. Such embodiments typically also include sending the data from the buffer when the computer is connected to a changed computing environment having a new type of connection that has the security control required for the data. Many embodiments also include returning a non-fatal error to a sending program if the connection to the network lacks a security control required for the data. Such embodiments often also include the sending program's informing a user that the data will be held in a security buffer until the computer is connected to a changed computing environment having a new type of connection that has the security control required for the data. Many such embodiments include the sending program's prompting a user with the option to create a secure tunnel for transmission of the data.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### Brief Description of the Drawings

Figure 1 depicts an exemplary architecture for data communications in which various exemplary embodiments of the present invention may be implemented.

Figure 2 sets forth a block diagram of automated computing machinery comprising a computer useful in computing environments according to embodiments of the present invention.

Figure 3 sets forth a block diagram of an exemplary data communications protocol stack.

Figure 4 sets forth a line drawing of a data entry screen on an email client improved according to embodiments of the present invention.

Figure 5 sets forth a flow chart illustrating an exemplary method for providing a necessary level of security for a computer capable of connecting to different computing environments.

Figure 6 sets forth a block diagram illustrating secure tunneling according to the IPsec protocol.

### Mode for the Invention

**DETAILED DESCRIPTION OF EXEMPLARY EMBODIMENTS**

The present invention is described to a large extent in this specification in terms of methods for providing a necessary level of security for computers capable of connecting to different computing environments. Persons skilled in the art, however, will recognize that any computer system that includes suitable programming means for operating in accordance with the disclosed methods also falls well within the scope of the present invention. Suitable programming means include any means for directing a computer system to execute the steps of the method of the invention, including for example, systems comprised of processing units and arithmetic-logic circuits coupled to computer memory, which systems have the capability of storing in computer memory, which computer memory includes electronic circuits configured to store data and program instructions, programmed steps of the method of the invention for execution by a processing unit.

The invention also may be embodied in a computer program product, such as a diskette or other recording medium, for use with any suitable data processing system. Embodiments of a computer program product may be implemented by use of any recording medium for machine-readable information, including magnetic media, optical media, or other suitable media. Persons skilled in the art will immediately recognize that any computer system having suitable programming means will be capable of executing the steps of the method of the invention as embodied in a program product. Persons skilled in the art will recognize immediately that, although most of the exemplary embodiments described in this specification are oriented to software installed and executing on computer hardware, nevertheless, alternative embodiments implemented as firmware or as hardware are well within the scope of the present invention.

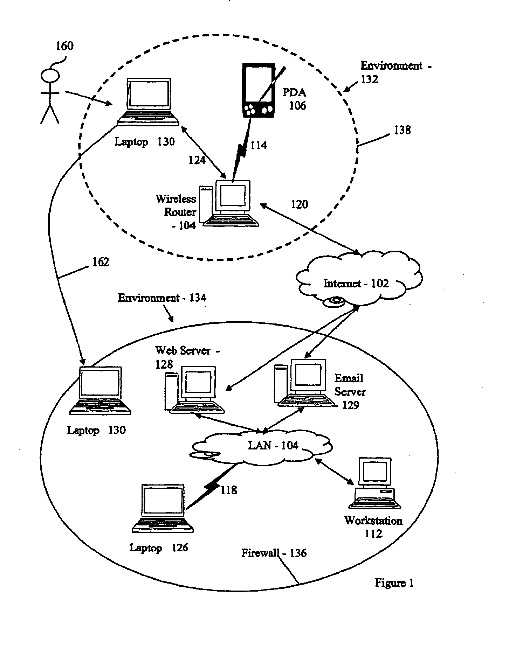

Exemplary methods, systems, and products for providing a necessary level of security for computers capable of connecting to different computing environments are further explained with reference to the accompanying drawings, beginning with Figure 1. Providing a necessary level of security for computers capable of connecting to different computing environments according to exemplary embodiments of the present invention is implemented generally by monitoring a type of connection between a computer and a network in a current computing environment, determining a security level of data to be sent across the network, and storing the data in a buffer instead of sending the data across the network if the connection to the network lacks a security control required for the determined security level of the data. Later when the computer is connected to a changed computing environment having a new type of connection that has the security control required for the data, the data is sent from the buffer to its destination.

A computing environment is a group of computers having available to them similar levels of data communications security. Figure 1 depicts an exemplary architecture for data communications in which various exemplary embodiments of the present invention may be implemented. In particular, Figure 1 depicts two exemplary computing environments. Computing environment 132 includes laptop computer 130 and PDA 106 connected through wireline connection 124 and unencrypted wireless link 114 respectively through a wireless router 104 to an internet 102.

Wireless router 104 is a computer that provides a wireless access point, a communication hub through which wireless devices 130 and 106 connect to a wired network 102. To the extent that a computing environment provides some level of wireless security, such levels of wireless security generally are made available through wireless access points such as router 104. Wired networks that support wireless access, such as, for example, local area network ("LAN") 104, typically include one or more wireless access points (not shown on Figure 1).

An "internet" (uncapitalized) is any set of networks interconnected with routers. In this specification, the term "Internet" (capitalized) refers to the well-known global network connecting millions of computers utilizing various protocols, including the Internet Protocol or 'IP' as the network layer of their networking protocol stacks. The Internet is characterized by massive difficulties regarding data communications security, and this is one of the challenges with which this specification is concerned. That is, as persons of skill in the art will recognize, internet 102 may be, and indeed often is, the Internet, and use of low levels of security in connecting to it represents significant risks to data communications.

The group of computers forming computing environment 132 have available to them similar levels of data communications security representing in effect, no particular level of security at all, a fact that is symbolized by the dashed line 138 delimiting computing environment 132. Examples of computing environments of the kind exemplified by computing environment 132 include coffee shops that provide hotspots for wireless laptop connections to the Internet and hotels that provide wireline Internet connections in each room.

Computing environment 134, on the other hand, is characterized by availability of higher levels of security. Computing environment 134 includes laptop computer 126, workstation 112, email server 129, and web server 128, all connected through local area network ("LAN") 104. Computing environment 134 is disposed entirely behind corporate firewall 136 which scrutinizes all data communications in and out of computing environment 134. Both laptop 126 and workstation 112 have available support for tunneling connections to other computers across the internet 102.

Also in computing environment 134, laptop 126 is connected to the corporate LAN 104 through an encrypted wireless connection 118. Examples of encrypted wireless connections useful in accordance with various embodiments of the present invention include Wired Equivalent Privacy ("WEP"), Wi-Fi Protected Access ("WPA"), and other as will occur to those of skill in the art.

WEP is a security protocol for wireless LANs defined in the IEEE 802. 1 1b standard. WEP is intended to provide a similar level of security as that of a wired network connection. By comparison with wireless LANs, wired LAN connections are inherently more secure because wired LAN connections are protected by the physical nature of their structure, typically having some or all part of the network inside a building that can be protected from unauthorized access. Wireless LANs, which are implemented over radio waves, do not have the same physical structure and therefore are more vulnerable to tampering. WEP aims to provide security by encrypting data transmitted over radio waves so that it is protected as it is transmitted from a client to an access point or from one end point to another. WEP functions at the lowest layers of the OSI protocol stack-the data link layer and the physical layer.

WPA is a 'Wi-Fi' standard, that is, an IEEE 802.11 standard, designed to improve the security features of WEP. WPA, however, is an interim standard eventually to be replaced by the IEEE 802. 1 li standard. WPA is usually implemented as software upgrades for hardware in existing Wi-Fi products enabled for WEP, but WPA improves WEP with better data encryption through the Temporal Key Integrity Protocol("TKIP"). WPA also improves WEP by adding user authentication and public key encryption through the Extensible Authentication Protocol ("EAP").

The examples of computing environments illustrated in Figure 1 are for explanation, not for limitation. Computing environments may include additional servers, clients, routers, and other devices not shown in Figure 1 as will occur to those of skill in the art. Networks in or associated with such computing environments may support many data communications protocols, Simple Mail Transfer Protocol ("SMTP"), the Post Office Protocol("POP"), the Hypertext Transport Protocol the Wireless Access Protocol("WAP"), the Handheld Device Transport Protocol ("HDTP"), the Transport Control Protocol/Internet Protocol Suite ("TCP/IP"), and others as will occur to those of skill in the art. Figure 1 presents examples of heterogeneous computing environment in which various embodiments of the present invention may be implemented, not as an architectural limitation of the present invention.

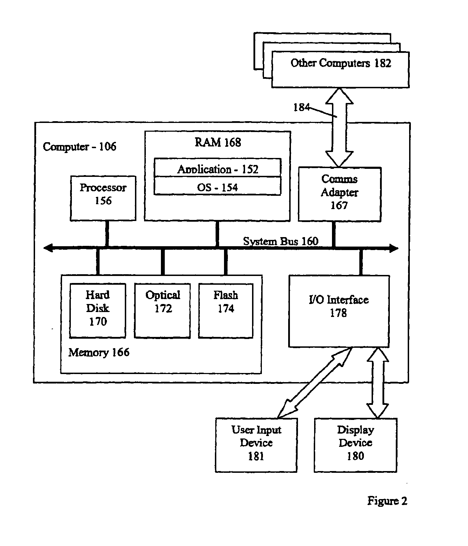

A "computer" is any automated computing machinery. The term "computer" as used in this specification therefore includes not only general purpose computers such as laptops, personal computer, minicomputers, and mainframes, but also includes devices such as personal digital assistants ("PDAs), network enabled handheld devices, internet-enabled mobile telephones, and so on. Figure 2 sets forth a block diagram of automated computing machinery comprising a computer 106 useful in computing environments according to embodiments of the present invention. The computer 106 of Figure 2 includes at least one computer processor 156 or 'CPU' as well as random access memory 168 ("RAM"). Stored in RAM 168 is an application program 152. Application programs useful in accordance with various embodiments of the present invention include browsers, email clients, TCP/IP clients, and so on, as will occur to those of skill in the art.

When a computer like computer 106 is operated as an email client, application 152 includes email client application software. When a computer like computer 106 is operated as a browser, application 152 includes browser application software. Examples of email application software include, for example, Microsoft's Outlook™, Qualcomm's Eudora™, or Lotus Notes™,. Examples of browser application software include Microsoft Explorer™, Netware Netscape™, and NCSA Mosaic™. Transport and network layer software clients such TCP/IP clients are typically provided as components of operating systems, including Microsoft Windows™, IBM's AIX™, Linux™, and so on. Also stored in RAM 168 is an operating system 154. Operating systems useful in computers or according to embodiments of the present invention include Unix, Linux™, Microsoft NT™, and others as will occur to those of skill in the art. Application software and operating systems may be improved by use of plug-ins, kernel extensions, or modifications at the source code level in accordance with embodiments of the present invention, or, alternatively, completely new application or operating system software may be developed from scratch to implement embodiments of the present invention. Lotus, Lotus Notes, IBM and AIX are registered trademarks of IBM Corporation in the US, other countries or both. Microsoft Outlook, Internet Explorer and Windows NT are trademarks of Microsoft Corporation Linux is a trademark of Linus Torvalds, in the US, other countries or both. Unix is a registered trademark of The Open Group in the US and other countries.

The example computer 106 of Figure 2 includes computer memory 166 coupled through a system bus 160 to the processor 156 and to other components of the computer. Computer memory 166 may be implemented as a hard disk drive 170, optical disk drive 172, electrically erasable programmable read-only memory space(so-called 'EEPROM' or 'Flash' memory) 174, RAM drives (not shown), or as any other kind of computer memory as will occur to those of skill in the art.

The example computer 106 of Figure 2 includes communications adapter 167 that implements connections for data communications 184 to other computers 182. Communications adapters implement the hardware level of data communications connections through which client computers and servers send data communications directly to one another and through networks. Examples of communications adapters include modems for wired dial-up connections, Ethernet (IEEE802. 3) adapters for wired LAN connections, and 802.11 adapters for wireless LAN connections.

The example computer of Figure 2 includes one or more input/output interface adapters 178. Input/output interface adapters in computers implement user-oriented input/output through, for example, software drivers and computer hardware for controlling output to display devices 180 such as computer display screens, as well as user input from user input devices 181 such as keyboards and mice.

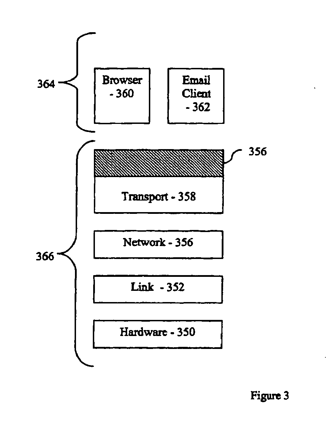

Software architectural aspects of the present invention are further explained with referenced to Figure 3. Figure 3 sets forth a block diagram of an exemplary data com- munications protocol stack, similar to the well known OSI standard for such protocol stacks. The stack of Figure 3 includes a hardware layer 350, a link layer 352, a network layer 356, a transport layer 358, and an application layer 364. The software aspects of the hardware layer 350, the link layer 352, the network layer 356, and the transport layer 358 typically are considered components of an operating system, while protocol layers above those 364 typically are considered applications. Browsers 360 and email clients 362 are examples of application software that implement application-level data communications protocols such as HTTP, SMTP, POP, and other as will occur to those of skill in the art.

The Transmission Control Protocol ("TCP") is an example of a transport layer protocol 358, and the Internet Protocol ("IP") is an example of a network layer protocol 356. TCP and IP are used together so often in the transport layer and the network layer, that they are generally referred to an making up a 'suite' of data communication software often referred to together as "TCP/IP." Embodiments of the present invention in their software aspects are preferably implemented and installed as a daemon operating just above the transport layer 356 in the protocol stack or as an improvements of transport layer software. Although it is not a limitation of the present invention, because many kinds of transport software and many kinds of network software are useful in various embodiments of the present invention, it is often the case that processing steps of the present invention are implemented in software as improvements of or additions to TCP or TCP/IP.

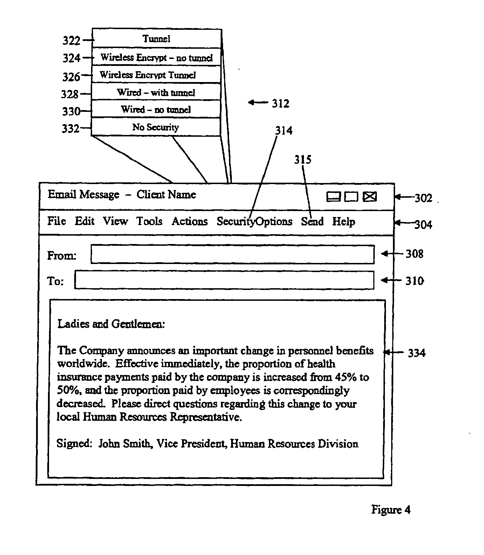

Exemplary embodiments of the present invention are further explained with reference to Figure 4. Figure 4 sets forth a line drawing of a data entry screen on an email client improved according to embodiments of the present invention. The data entry screen of Figure 4 includes a title line 302 that displays the fact that the document under edit is an email document and the name of the email client ("Client Name"). In actual embodiments, the 'Client Name' is often the actual name of an email client application such as Lotus Notes™, Microsoft Outlook™, or Qualcomm Eudora™

The data entry screen of Figure 4 includes a horizontal menu 304 containing the usual menu items such as'File,' 'Edit, 'View,' and so on. In addition to the usual kind of menu items for such an email screen, the horizontal menu 304 contains a new item labeled 'Security Options' 314 referring to security options as improvements according to embodiments of the present invention. Invoking the Security Options menu item 314 displays the pull-down menu 312 which makes available several functions supporting security options according to embodiments of the present invention.

The exemplary email client of Figure 4 is programmed to insert in meta-data in an email message, in response to a user's selecting pull-down menu item 322, a required security level for the data in the email message of at least an IP tunnel, regardless whether the connection is wired or wireless. Similarly, a user's selecting item 324 inserts meta-data identifying a required level of security that includes at least encryption for wireless connections. Item 326 requires an encrypted wireless connection in addition to tunneling. When the connection is wired, selecting item 328 requires a tunnel, useful when a user connects a laptop to an Ethernet port in a hotel room outside any corporate firewall. Selecting item 330 encodes meta-data requiring no tunnel for a wired connection, appropriate when, for example, the user knows the computer in question is connected behind a corporate firewall. Selecting item332,'No Security, 'advises the sending application, the example email client of Figure 4, to insert no meta-data regarding security-or alternatively to insert meta-data affirmatively stating 'no security.' A 'no security' level of security is in fact useful for many casual kinds of data communications.

That fact the exemplary sending program of Figure 4 is represented as an email client is not a limitation of the present invention. On the contrary, many email clients are useful in various embodiments of the present invention, including HTTP clients or browsers, microbrowsers on network enabled wireless devices, TCP/IP clients, tunneling clients such as IPsec clients or PPTP clients, and so on. The use of all such sending programs, and others as will occur to those of skill in the art, is well within the scope of the present invention.

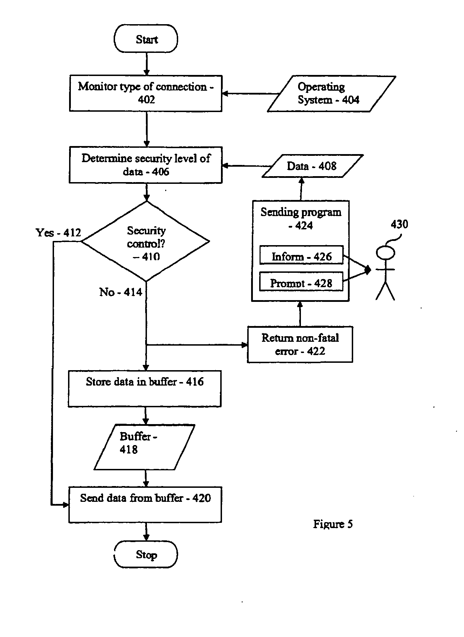

Figure 5 sets forth a flow chart illustrating an exemplary method for providing a necessary level of security for a computer capable of connecting to different computing environments. The method of Figure 5 includes monitoring 402 a type of connection between the computer and a network in a current computing environment. The 'type of connection' refers generally to the security controls available for data communications connections in the computing environment. Available security controls are determined according to standard operating system calls, services, and data structures. In IBM's AIX, for example, the operating system calls LSCFG, LSATTR, LSCONN, LSDEV, and LSPARENT return data indicating the status of data communications devices, including available security controls.

Monitoring 402 a type of connection may be accomplished by periodically determining the type of connection between the computer and the network. A process programmed to carry out the step of periodically determining the type of connection may, for example, be programmed to loop by sleeping for some period of time, waking to check the types of connection available, sleeping, waking and checking, and so on, for as long as the computer is on. When the daemon or process wakes to monitor the connection type or security level, it may initiate an Application Program Interface ("API') call such as a device driver ioctl() call or a system call to a security library asking the operating system for the security program running at the time.

Monitoring 402 a type of connection may include event-driven determining of the type of connection between the computer and the network. In one example of an event- driven determining of the type of connection, the steps of the method are carried out by a software process and event-driven determining of the type of connection is carried out whenever the process is invoked. In an example where a TCP/IP client is enhanced according to embodiments of the present invention and installed on a laptop computer, if the TCP/IP client is run every time the laptop is powered up, then the determination of the type of connection is carried every time the laptop is powered up.

In another example of event-drive determining of the type of connection, determining 406 a security level results in a determination that data to be transmitted requires at least some level of security and event-driven determining of the type of connection is carried out in response to such determination. It is possible, indeed common, that data to be transmitted across a network either contains no meta-data indicating a required level of security or contains meta-data affirmatively indicating that no particular level of security is required. To the extent that no particular level of security is needed, then there is no need to determine the type of connection. When, however, a software process carrying out steps of the present invention reads from data to be transmitted across a network meta-data indicating that some level of security other none is required, the process treats that determination as a event in response to which the process determines the type of connection and the level or levels of security available for sending data across a network.

The exemplary method of Figure 5 also includes determining 406 a security level of data 408 before sending the data across the network. Determining 406 a security level of data before sending the data across the current network is preferably accomplished by reading the security level of data from meta-data in a header in a network message. Determining 406 a security level of data before sending the data across the current network also may be carried out by reading the security level of data from a markup element embedded in the data.

"Meta-data" means data describing other data. The term is used in this disclosure in particular to mean data describing data to be sent across a network. Meta-data is preferably set forth within the data to be sent across the network. Meta-data includes data describing a required security level for data to be sent across a network. Data is typically sent across networks in data communications messages having forms defined in data communications protocols, HTTP, SMTP, TCP/IP, and so on. Data communications messages generally are composed of a 'header' and a 'body.' The header includes various fields such as a sender's identification, addressees' identifications, source address, destination address, route tracing data, and so on. The body typically is text or other data comprising message content. It is useful to distinguish meta-data- from a message body and other usual header fields.

Some email protocols, including SMTP for example, support optional additional header fields in which meta-data may be placed. In the example of SMTP, so-called 'optional fields' are defined in the standard, including a required syntax : a field name (that must not duplicate a standard field name) followed by a colon followed by un- structured text. Consider the following example :

From: John Doe <jdoe@machine.exampte >

To: Mary Smith < mary@example.net >

Subject: Saying Hello

Date: Fri, 21 Nov 2003 09: 55: 06

Message-ID: < 1234@local.machine.example >

Required-Security : wireless encrypted

Mary,

This is a message just to say 'hello.'I enjoyed meeting you at the conference last week. Let's stay in touch.

Regards,

John

In this example, the first five fields, From :,' To :,' Subject :,' Date :,' and 'Message-ID' are standard SMTP fields. The last field, 'Required-Security,' is a new meta-data field a required security level of the data in the email message. The Required-Security field in this example specifies "wireless encrypted, "meaning that any wireless connection to a network through which this example message is to be sent is to be an encrypted connection, that is, a connection using WEP, WPA, or some other form of wireless connection providing data encryption.

Another way of including meta-data in data to be sent across a network is to insert the meta-data in the message body itself. SMTP, for example, uses this method to insert time stamps on messages when they are relayed through email servers and when they are received in destination servers. In the following email message, for example:

From: John Doe < jdoe@machine.example >

To: Mary Smith@example.net >

Subject: Saying Hello

Date: Fri, 21 Nov 2003 09: 55: 06

Message-id: 1234@local.machine.example >

< Required-Security : wireless encrypted >

Mary,

This is a message just to say 'hello.'I enjoyed meeting you at the conference last week. Let's stay in touch.

Regards,

John,

the meta-data element identifying required security level for the email message as requiring wireless encryption is delimited with angle-brackets < > and inserted at the beginning of the body of the message: < Required-Security: wireless encrypted >.

Many email systems support message formatting in the Hypertext Markup Language ("HTML"). In this example:

< HTML >

< HEAD >

< META name="Required-Security"

content="wireless encrypted" >

< /HEAD>

< BODY >

Mary,

This is a message just to say'hello.' I enjoyed meeting you

at the conference last week. Let's stay in touch.

Regards,

John

< BODY >

< /HTML >

the meta-data element identifying the required security level for the message data is set forth in an HTML < META > tag. In addition to optional protocol header fields, insertion in message body segments, and insertion in HTML < META > tags, other methods of including in data to be sent across a network meta-data identifying required security levels will occur to those of skill in the art, and all such methods are well within the scope of the present invention.

The exemplary method of Figure 5 also includes storing 416 the data in a buffer 416 instead of sending the data across the network if the connection to the network lacks a security control 410 required for the determined security level of the data. The exemplary method of Figure 5 also includes sending 420 the data from the buffer when the computer is connected to a changed computing environment having a new type of connection that has 412 the security control required for the data. Readers will recognize this aspect as one of the principal benefits of the present invention. An example useful for explanation is a user's beginning operations on a laptop (reference 126, Figure 1) in a secure computing environment like the one illustrated at reference 134 on Figure 1. So long as the user remains in computing environment 134, determining a type of connection will result indeterminations that encrypted wireless connections are available, as well as tunneled connections, and so on. Later the user carries the laptop 126 to the less secure computing environment132. Now when the laptop powers up in the less secure environment, the laptop determines by use of operating system calls the types of connections available and discovers that the computing environment 132 does not support encrypted wireless connections. When the user then attempts to send an email message marked in its meta-data as requiring encryption for wireless transmissions, the transport layer client (often TCP), which is enhanced according to the present invention, compares the types of connection available in the computing environment 132 with the level of security identified in the email message, determines that the required level of security is not available in the computing environment, and buffers the email message rather than sending it.

The method of Figure 5 also preferably includes returning 422 a non-fatal error to a sending program 424 if the connection to the network lacks a security control required for the data. The method of Figure 5 also preferably includes the sending program's informing 426 a user 430 that the data will be held in a security buffer until the computer is connected to a changed computing environment having a new type of connection that has the security control required for the data. Continuing the example from the previous paragraph, the sending program 424 in this example is an email client such as Microsoft Outlook. The email client attempted to open a TCP connection to its SMTP server to send the email message, but the enhanced TCP client determined that the required security level is not available, buffered the email message, and returned an error message to the calling program, the sending program, the email client, notifying the sending program that the email message would be buffered for now and sent later. The sending program, in this case the email client, in turn presents a dialogue box on the display of the laptop notifying the user that the email message has been buffered until such time as the laptop is moved to a computing environment that provides the required level of security for the data in the email message.

The method of Figure 5 also preferably includes the sending program's prompting 428 a user 430 with the option to create a secure tunnel for transmission of the data. A "tunnel" is a data communications technique in which one protocol layer sends data via another protocol layer's network connections. Tunneling works by encapsulating one protocol layer's message data within packets carried by another network protocol layer. Examples of tunneling protocols include the IP Security Protocol("IPsec") and the Point to Point Tunneling Protocol("PPTP"). PPTP is promulgated by the PPTP Forum which consists of Ascend Communications, Microsoft Corporation, 3Com/Primary Access, ECI Telematics, and U. S. Robotics. IPsec is a set of protocols developed by the Internet Engineering Task Force(IETF"). Both IPsec and PPTP work by encrypting IP messages and encapsulating the encrypted messages in further IP packets.

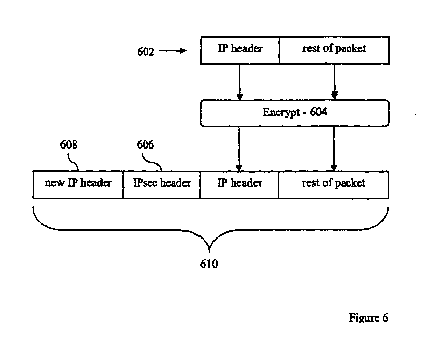

An example of IPsec tunneling is shown in a block diagram in Figure 6. In the example of Figure 6, a normal IP packet 602 is encrypted 604. An IPsec header 606 and a second IP header 608 are added to the encrypted packet. Then the entire new packet 610 is sent through the normal IP layer of the data communications protocol stack as an ordinary IP packet. When the packet arrives at a destination node, the new IP header 608 and the IPsec header 606 are discarded. The original packet is then un- encrypted and handed off to the IP layer of the protocol stack to be treated like an ordinary IP packet. When a TCP client, for example, prompts 428 a user 430 with an option to create a secure tunnel for transmission of data and the user accepts the option, a TCP client enhanced according to embodiments of the present invention then calls a tunneling client, such as an IPsec client or PPTP client for transmission of the actual IP packets.

It is useful to note that an advantage of using tunneling is that the availability of tunneling as a level of security is independent of the level of security available in the computing environment itself. That is, whether tunneling is available as a level of security for sending data across a network depends on availability of a tunneling client on the sending computing and tunneling software on the destination node. When the less secure computing environment (132 on Figure 1) is a coffee shop with un- encrypted wireless access point, for example, whether tunneling is available depends only on the software installed on the laptop and the software on the computer rep- resenting the destination of any particular data to be sent across the network-and not on the level of security available from the wireless access point in the coffee shop itself.

By way of further explanation, an exemplary use case is described with particular reference to Figures 1 and 4. In this example, a user connects a computer to a network in a first computing environment. That is, user 160 connects laptop computer 130 to computing environment 132. Assume for purposes of this example that connection 124 is an 802. 11b wireless connection to wireless router 104. Wireless router 104 represents a wireless hot spot in a public space such as a coffee shop or an airline terminal.

The user uses the laptop to create data to be sent across network 102, and the user specifies a security level for the data to be sent across the network. In this example, the user creates data to be sent by typing in an email message such as the one shown at reference 334 on Figure 4. The user specifies a security level of "wireless encryption- no tunnel" by selecting menu item 324 from menu 312 of the sending program, in this example, the email client illustrated in Figure 4. The user instructs the sending program to send the data across the network by invoking the 'Send' button 315 on the email client.

The email monitors the available security control between the laptop and the network, compares it with the specified security level for the data, and, in this example, determines that the connection to the network lacks a security control required to meet the specified security level for the data, "wireless encryption-no tunnel :' The email client then buffers the outgoing email message, and the user receives an indication that security control of the first computing environment lacks a security control required for the specified security level. That is, the user receives from the email client, through a pop-up dialogue box, an email message in the user's in-box, or other means, advice that wireless encryption is not available in the first computing environment and that the email message will be held until a more secure computing environment is available.

The user moves 162 the laptop 130 and connects it to the network 102 through a second computing environment 134. The second computing environment has the security control required for the specified security level. The second computing environment 134 is, for example, a corporate computing environment disposed entirely behind a corporate firewall 136 which scrutinizes all data communications in and out of computing environment 134 and includes a security control for wireless encryption without a tunnel. After moving laptop 130 to the second computing environment 134, the user receives an indication that the data, the exemplary email message, has been sent across the network. The indication that the message has been sent may be received through a dialogue box, a copy of the message in the user's 'Sent' box, or other means as will occur to those of skill in the art.

In this example, when the computer is connected to the second network, the email client may determine automatically that the second computing environment has the security control required for the specified security level. The email client may then proceed by automatically sending the data across the network promptly upon determining that the second computing environment has the security control required for the specified security level. Alternatively, the email client may present to the user the fact that the second computing environment has the security control required for the specified security level, so that the user receives an affirmative indication, through a dialogue box or an email message, for example, that the second computing environment has the security control required for the specified security level. In such a case, the user may proceed by again instructing the sending program (the email client in this example) to send the data across the network.

## Claims

1. A method for providing a necessary level of security for a computer (130) capable of connecting to different computing environments (132, 134), comprising:
i) monitoring (402) a type of connection (118, 124) between the computer (130) and a network (102) in a current computing environment (132, 134); and
ii) determining (406) a security level of data (408) before sending (424) the data across the network;
**characterised by**:
iii) storing (416) the data in a buffer (418) instead of sending the data across the network if the connection (124) to the network lacks (414) a security control (410) required for the determined security level of the data;
and,
iv) sending the data (420) from the buffer when the computer is connected to a changed computing environment (134) having a new type of connection (118) that has (412) the security control required for the data.

2. The method of claim 1 wherein monitoring a type of connection comprises:
i) periodically determining (402) of the type of connection (118, 124) between the computer (130) and the network (102);
and/or,
ii) event-driven determining of the type of connection between the computer and the network.

3. The method of claim 2, wherein the steps of the method are carried out by a software process and event-driven determining of the type of connection (118, 124) is carried out whenever the process is invoked.

4. The method of claim 2 or claim 3, wherein determining (406) a security level results in a determination that data (408) to be transmitted requires at least some level of security and event-driven determining of the type of connection (118, 124) is carried out in response to such determination.

5. The method of any of claims I to 4, wherein determining (406) a security level of data (408) before sending the data across the current network (102) comprises reading the security level of data from:
i) a markup element embedded in the data;
and/or
ii) meta-data in a header in a network message.

6. The method of any of claims 1 to 5, comprising returning (422) a non-fatal error to the sending program (424) if the connection (118, 124) to the network (102) lacks a security control required for the data (402).

7. The method of any of claims I to 6, comprising the sending program (424) informing a user (430) that the data (408) will be held in the buffer (418) until the computer (130) is connected to a changed computing environment (134) having a new type of connection (118) that has the security control required for the data.

8. The method of claim 6 or claim 7, comprising the sending program (424) prompting a user (430) with the option to create a secure tunnel for transmission of the data (408).

9. The method claim 2 or claim 3 comprising:
i) connecting the computer (130) to a network (102) in a first computing environment (132);
ii) instructing a sending program (424) to send the data (408) across the network;
iii) receiving an indication that security control (410) of the first computing environment lacks a security control required for the specified security level;
iv) connecting the computer (130) to the network in a second computing environment (134), wherein the second computing environment has the security control (410) required for the specified security level;
and,
v) receiving an indication that stored data in the buffer (418) has been sent across the network

10. The method of claim 9, comprising receiving an indication that the second computing environment (134) has the security control (410) required for the specified security level; and again instructing (420) the sending program (424) to send the data (408) across the network (102).

11. A system for providing a necessary level of security for a computer capable of connecting to different computing environments comprising means to effect the method of any of claims I to 10.

12. Computer program element comprising computer readable program code, executable by a digital processing unit to perform the method of any of claims 1 to 10.

## Patentansprüche

1. Verfahren zum Bereitstellen eines notwendigen Sicherheitsgrades für einen Computer (130) mit der Fähigkeit zur Verbindung mit verschiedenen Datenverarbeitungsurngebungen (132, 134), das aufweist:
i) Überwachen (402) einer Verbindungsart (118, 124) zwischen dem Computer (130) und einem Netzwerk (102) in einer aktuellen Datenverarbeitungsumgebung (132, 134);
und
ii) Feststellen (406) eines Sicherheitsgrades von Daten (408) vor dem Senden (424) der Daten über das Netzwerk;
**gekennzeichnet durch**:
iii) Speichern (416) der Daten in einem Zwischenspeicher (418) an Stelle des Sendens der Daten über das Netzwerk, wenn die Verbindung (124) mit dem Netzwerk keine Sicherheitsüberwachung (410) aufweist (414), wie sie für den festgestellten Sicherheitsgrad der Daten erforderlich ist;
und
iv) Senden der Daten (420) von dem Zwischenspeicher, wenn der Computer mit einer geänderten Datenverarbeitungsumgebung (134) verbunden ist, die eine neue Verbindungsart (118) aufweist, die die für die Daten erforderliche Sicherheitsüberwachung aufweist (412).

2. Verfahren nach Anspruch 1, wobei das Überwachen einer Verbindungsart aufweist:
i) periodisches Feststellen (402) der Verbindungsart (118, 124) zwischen dem Computer (130) und dem Netzwerk (102);
und/oder
ii) ereignisgesteuertes Feststellen der Verbindungsart zwischen dem Computer und dem Netzwerk.

3. Verfahren nach Anspruch 2, wobei die Schritte des Verfahrens durch einen Softwareprozess ausgeführt werden und das ereignisgesteuerte Feststellen der Verbindungsart (118, 124) jedes Mal ausgeführt wird, wenn der Prozess aufgerufen wird.

4. Verfahren nach Anspruch 2 oder Anspruch 3, wobei das Feststellen (406) eines Sicherheitsgrades eine Feststellung zum Ergebnis hat, dass zu übertragende Daten (408) zumindest irgendeinen Sicherheitsgrad erfordern und das ereignisgesteuerte Feststellen der Verbindungsart (118, 124) als Reaktion auf eine solche Feststellung ausgeführt wird.

5. Verfahren nach einem der Ansprüche 1 bis 4, wobei das Feststellen (406) eines Sicherheitsgrades der Daten (408) vor dem Senden der Daten über das aktuelle Netzwerk (102) das Lesen des Sicherheitsgrades der Daten aufweist aus:
i) einem in den Daten eingebetteten Markup Element; und/oder
ii) Metadaten in einem Dateikopf in einer Netzwerknachricht.

6. Verfahren nach einem der Ansprüche 1 bis 5, das das Rücksenden (422) eines nicht unbehebbaren Fehlers an das Sendeprogramm (424) aufweist, wenn die Verbindung (118, 124) mit dem Netzwerk (102) keine für die Daten (402) erforderliche Sicherheitsüberwachung aufweist.

7. Verfahren nach einem der Ansprüche 1 bis 6, das aufweist, dass das Sendeprogramm (424) einen Anwender (430) darüber informiert, dass die Daten (402) in dem Zwischenspeicher (418) gehalten werden, bis der Computer (130) mit einer geänderten Datenverarbeitungsumgebung (134) verbunden ist, die eine neue Verbindungsart (118) aufweist, die die für die Daten erforderliche Sicherheitsüberwachung aufweist.

8. Verfahren nach Anspruch 6 oder Anspruch 7, das aufweist, dass das Sendeprogramm (424) einen Anwender (430) mit der Option abfragt, eine sichere Strecke zum Übertragen der Daten (408) zu erzeugen.

9. Verfahren nach Anspruch 2 oder Anspruch 3, das aufweist:
i) Verbinden des Computers (130) mit einem Netzwerk (102) in einer ersten Datenverarbeitungsumgebung (132);
ii) Anweisen eines Sendeprogramms (424) die Daten (408) über das Netzwerk zu senden;
iii) Empfangen eines Hinweises, dass die Sicherheitsüberwachung (410) der ersten Datenverarbeitungsumgebung keine für den festgelegten Sicherheitsgrad erforderliche Sicherheitsüberwachung aufweist;
iv) Verbinden des Computers (130) mit dem Netzwerk in einer zweiten Datenverarbeitungsumgebung (134), wobei die zweite Datenverarbeitungsumgebung die für den festgelegten Sicherheitsgrad erforderliche Sicherheitsüberwachung (410) aufweist;
und
v) Empfangen eines Hinweises, dass die in dem Zwischenspeicher (418) gespeicherten Daten über das Netzwerk gesendet worden sind.

10. Verfahren nach Anspruch 9, das das Empfangen eines Hinweises aufweist, dass die zweite Datenverarbeitungsumgebung (134) die für den festgelegten Sicherheitsgrad erforderliche Sicherheitsüberwachung (410) aufweist; und erneutes Anweisen (420) des Sendeprogramms (424), die Daten (408) über das Netzwerk (102) zu senden.

11. Anordnung zum Bereitstellen eines notwendigen Sicherheitsgrades für einen Computer mit der Fähigkeit zur Verbindung mit verschiedenen Datenverarbeitungsumgebungen, die Mittel zur Ausführung des Verfahrens nach einem der Ansprüche 1 to 10 aufweist.

12. Computerprogrammelement, das computerlesbaren Programmcode aufweist, der von einer digitalen Verarbeitungseinheit ausführbar ist, um das Verfahren nach einem der Ansprüche 1 bis 10 auszuführen.

## Revendications

1. Procédé destiné à garantir un niveau de sécurité nécessaire pour un ordinateur (130) pouvant être connecté à différents environnements informatiques (132, 134), comprenant :
i) l'analyse (402) du type de connexion (118, 124) entre l'ordinateur (130) et un réseau (102) dans un environnement informatique courant (132, 134) ;
et
ii) la détermination (406) d'un niveau de sécurité des données (408) avant l'envoi (424) des données à travers le réseau ;
**caractérisé par** :
iii) le stockage (416) des données dans une mémoire tampon (418) au lieu d'envoyer les données à travers le réseau si la connexion (124) au réseau ne présente pas (414) un contrôle de sécurité (410) requis pour le niveau de sécurité déterminé des données ;
et
iv) l'envoi des données (420) de la mémoire tampon quand l'ordinateur est connecté à un environnement informatique modifié (134) ayant un nouveau type de connexion (118) qui présente (412) le contrôle de sécurité requis pour les données.

2. Procédé selon la revendication 1, l'analyse du type de connexion comprenant :
i) la détermination périodique (402) du type de connexion (118, 124) entre l'ordinateur (130) et le réseau (102) ;
et/ou
ii) la détermination commandée par événement du type de connexion entre l'ordinateur et le réseau.

3. Procédé selon la revendication 2, les étapes du procédé étant exécutées par un processus informatique et la détermination commandée par événement du type de connexion (118, 124) étant exécutée chaque fois que le procédé est invoqué.

4. Procédé selon la revendication 2, ou la revendication 3, la détermination (406) d'un niveau de sécurité ayant pour résultat la détermination que les données (408) devant être transmises exigent au moins un certain niveau de sécurité et la détermination commandée par événement du type de connexion (118, 124) étant exécutée en réponse à une telle détermination.

5. Procédé selon l'une quelconque des revendications 1 à 4, la détermination (406) d'un niveau de sécurité des données (408) avant l'envoi des données à travers le réseau courant (102) comprenant l'évaluation du niveau de sécurité des données par la lecture :
i) d'un élément de marquage intégré dans les données ;
et/ou
ii) de métadonnées intégrées dans un en-tête d'un message de réseau.

6. Procédé selon l'une quelconque des revendications 1 à 5, comprenant le retour (422) d'une erreur non fatale au programme d'envoi (424) si la connexion (118, 124) au réseau (102) ne présente pas un contrôle de sécurité (410) requis pour les données (402).

7. Procédé selon l'une quelconque des revendications 1 à 6, comprenant le fait que le programme d'envoi (424) informe un utilisateur (430) que les données (408) seront conservées dans la mémoire tampon (418) jusqu'à ce que l'ordinateur (130) soit connecté à un environnement informatique modifié (134) ayant un nouveau type de connexion (118) qui présente le contrôle de sécurité requis pour les données.

8. Procédé selon la revendication 6 ou 7, comprenant le fait que le programme d'envoi (424) invite un utilisateur (430) à choisir l'option de créer un tunnel sécurisé pour la transmission des données (408).

9. Procédé selon la revendication 1 ou 2, comprenant :
i) la connexion de l'ordinateur (130) à un réseau (102) dans un premier environnement informatique (132) ;
ii) l'instruction à un programme d'envoi (424) d`envoyer les données (408) à travers le réseau ;
iii) la réception d'une indication que le contrôle de sécurité (410) du premier environnement informatique ne présente pas un contrôle de sécurité requis pour le niveau de sécurité spécifié ;
iv) la connexion de l'ordinateur (130) au réseau dans un second environnement informatique (134), ledit second environnement informatique présentant le contrôle de sécurité (410) requis pour le niveau de sécurité spécifié ;
et,
v) la réception d'une indication que les données stockées dans la mémoire tampon (418) ont été envoyées à travers le réseau.

10. Procédé selon la revendication 9, comprenant la réception d'une indication que le second environnement informatique (134) présente le contrôle de sécurité (410) requis pour le niveau de sécurité spécifié ; et une nouvelle fois l'instruction (420) au programme d'envoi (424) d'envoyer les données (408) à travers le réseau (102).

11. Système destiné à garantir un niveau de sécurité nécessaire pour un ordinateur pouvant être connecté à différents environnements informatiques comprenant les moyens nécessaires pour exécuter le procédé selon l'une quelconque des revendications 1 à 10.

12. Elément de programme informatique comprenant un code de programme lisible par un ordinateur et exécutable par une unité de traitement numérique pour exécuter le procédé selon l'une quelconque des revendications 1 à 10.
